# EUROPÄISCHE PATENTSCHRIFT

(11) **EP 0 461 737 B1**
(45) Veröffentlichungstag und Bekanntmachung des Hinweises auf die Patenterteilung: **03.01.1996**
(21) Anmeldenummer: 91250148.3
(22) Anmeldetag: 07.06.1991
(51) Int. Cl.: C08L 101/10

(54) **Form- und Dichtungsmasse**
Moulding and caulking composition
Composition de moulage et d'étanchéité

(30) Priorität: 15.06.1990 DE 4019074
(43) Veröffentlichungstag der Anmeldung: 18.12.1991
(73) Patentinhaber: TEROSON GMBH, D-69046 Heidelberg (DE)
(72) Erfinder: Bride, Gabriele, W-6907 Nussloch (DE); Kern, Gisbert, W-6800 Mannheim (DE); Lepka, Wolfgang, W-6900 Heidelberg (DE); Schätzle, Michael, W-6909 Walldorf (DE)
(74) Vertreter: UEXKÜLL & STOLBERG

(56) Entgegenhaltungen:
- EP-A- 0 264 072
- CHEMICAL ABSTRACTS, vol. 108, no. 24, 13. Juni 1988, Columbus, Ohio, US; abstract no. 206453G, & JP-A-63 015 876

## Beschreibung

Die Erfindung betrifft eine Ein-Komponenten-Form- und -Dichtungsmasse auf Basis von SMP-Polymeren, die unter Wasserausschluß lagerfähig, bei Wasserzutritt aber zu Elastomeren vernetzbar ist und verbesserte Oberflächenklebrigkeitseigenschaften aufweist.

Feuchtigkeitshärtende Ein-Komponenten-Form- und Dichtungmassen sind an sich bereits bekannt. Eine bekannte Gruppe derartiger Massen enthält als Prepolymere sogenannte SMP-Polymere, die durch Luftfeuchtigkeit vernetzbar sind und bei denen es sich um Verbindungen mit Silylendgruppen mit mindestens einem hydrolysierbaren Substituenten am Si-Atom handelt. Derartige Prepolymere sowie daraus hergestellte Form- und Dichtungsmassen sind ausführlich in der DE-PS 38 16 808 unter Bezugnahme auf weitere Veröffentlichungen beschrieben. Auf die Offenbarung der DE-PS 38 16 808 wird hiermit in vollem Umfang bezug genommen.

Auf SMP-Polymeren basierende Form- und Dichtungsmassen reagieren bei Zutritt von Feuchtigkeit zu Elastomeren, wobei die Oberfläche eine erhebliche Klebrigkeit aufweist und daher ihr Einsatz überall dort nicht möglich ist, wo eine Verschmutzung durch Staub oder ähnliche Substanzen erfolgt bzw. zu befürchten ist. Der Erfindung lag dementsprechend die Aufgabe zugrunde, diese Oberflächenklebrigkeit so zu vermindern, daß bei Kontakt mit Stäuben unterschiedlicher Art eine Verschmutzung mit bleibendem Charakter (es muß eine leichte Entfernbarkeit der Verschmutzung mittels Pinsel, Tuch oder Benutzung von Wasser möglich sein) ausgeschlossen wird.

Zur Lösung dieser Aufgabe wird eine Ein-Komponenten-Form- und Dichtungsmasse auf Basis von Prepolymeren, die Silylendgruppen mit mindestens einem hydrolysierbaren Substituenten am Si-Atom enthalten, metallorganischen Zinnverbindungen als Katalysator sowie anorganischen Füllstoffen vorgeschlagen, die dadurch gekennzeichnet ist, daß sie Polyvinylchlorid (PVC) und thixotropierend wirkendes Fettsäureamid enthält.

Es wurde überraschend gefunden, daß PVC die Oberflächenklebrigkeit von auf SMP-Polymeren basierenden Form- und Dichtungsmassen bereits stark reduziert. Einen geringen Effekt zeigt auch thixotropierend wirkendes Fettsäureamid (Wachs). Es war deshalb völlig überraschend, daß die Kombination von PVC/thixotropierend wirkendes Fettsäureamid (Wachs) zu einer optimalen Verminderung der Oberflächenklebrigkeit führt, d.h. PVC und thixotropierend wirkendes Fettsäureamid (Wachs) führen zu einem synergistischen Effekt.

Wie üblich umfaßt der Begriff Polyvinylchlorid (PVC) Vinylchlorid-Homopolymere und solche Vinylchlorid-Copolymere, in denen das Vinylchlorid überwiegt und mehr als 50 Gew.% ausmacht. Bevorzugt sind erfindungsgemäß sogenannte Emulsionstypen, d.h. durch Emulsionspolymerisation hergestellte Polyvinylchloride. Die Polymerisation erfolgt dabei in wäßrigem Medium unter Verwendung von Peroxiden als Katalysatoren. Die nach der Filtration erhaltenen Polyvinylchloride enthalten schwankende Mengen an Emulgatoren. Der K-Wert (DIN 53726) dieser Emulsionstypen liegt beipielsweise im Bereich von 59 bis 79. In der Regel handelt es sich bei den bevorzugten PVC-Emulsionstypen um solche, die sich auch zur Herstellung von PVC-Pasten (PVC/Weichmachermischungen) eignen.

Die erfindungsgemäß zu verwendenden thixotropierend wirkenden Fettsäureamide sind handelsübliche Produkte, die als Thixotropiemittel angeboten werden. Hierbei handelt es sich im allgemeinen um Gemische von Fettsäureamiden. Als besonders geeignet hat sich beispielsweise ein Fettsäureamid-Thixotropiemittel erwiesen, das einen löslichen Anteil aus Fettsäureamiden mit verhältnismäßig geringem Molekulargewicht und einen unlöslichen Anteil aus Fettsäureamiden mit hohem Molekulargewicht aufweist.

Der PVC-Anteil in der erfindungsgemäßen Form- und Dichtungsmasse wird im wesentlichen dadurch begrenzt, daß die Viskosität so stark ansteigt, daß die Grenze für die Verarbeitbarkeit aus Kartuschen erreicht wird. In der Regel ist dies bei etwa 10 Gew.% PVC der Fall. Gewöhnlich beträgt der Anteil an PVC in der erfindungsgemäßen Form- und Dichtungsmasse deshalb je nach Anwendung zwischen 1 und 10 Gew.% und insbesondere 5 bis 10 Gew.%.

Die Wirksamkeit des Zusatzes von thixotropierend wirkendem Fettsäureamid (Wachs) wurde bis zu einer Konzentration von 3 Gew.% geprüft. Der gefundene synergistische Effekt mit PVC wurde über den gesamten Konzentrationsbereich beobachtet. Da thixotropierend wirkendes Fettsäureamid (Wachs) jedoch sehr teuer ist, erscheint die Anwendung höherer Konzentrationen unwirtschaftlich. Für die Praxis bevorzugte Konzentrationen an thixotropierend wirkendem Fettsäureamid (Wachs) sollten deshalb 3,0 Gew.% nicht überschreiten und vorzugsweise im Bereich von 0,1 bis 0,5 Gew.% und insbesondere 0,2 bis 0,3 Gew.% liegen.

Durch den Zusatz der Kombination PVC/thixotropierend wirkendes Fettsäureamid (Wachs) erhöht sich der 100% Modul. Falls dies für die vorgesehene Anwendung der erfindungsgemäßen Form- und die vorgesehene Anwendung der erfindungsgemäßen Form- und Dichtungsmasse von Nachteil oder unerwünscht ist, gelingt es mit Hilfe eines weiteren Zusatzmittels diesen Anstieg des 100% Moduls weitgehendst auszugleichen. Als für diesen Zweck geeignetes Zusatzmittel hat sich ein Fettsäureamid (Wachs) erwiesen, bei dem es sich um ein Reaktionsprodukt aus Ethylendiamin und Stearinund/oderPalmitinsäure handelt. Dieses Zusatzmittel wird in Abhängigkeit vom Anstieg des 100% Moduls in Mengen von 0,05 bis 1 Gew.% und vorzugsweise 0,1 bis 0,3 Gew.% verwendet.

Bei den silylmodifizierten Prepolymeren (SMP-Polymere) handelt es sich um Polyether, Polyester, Ether-Ester-Blockcopolymere, Vinylpolymere, Phthalsäurediallylester und Phthalsäurediallylester Prepolymere sowie Phthalsäurediallylestercopolymere, welche jeweils mindestens eine Silylgruppe der folgenden Formel I im Molekül enthalten 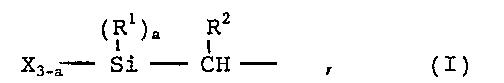 in welcher R¹ und R unabhängig voneinander Wasserstoffatome oder Alkyl-, Aryl- oder Aralkylreste mit bis zu 10 Kohlenstoffatomen bedeuten, X eine hydrolysierbare Gruppe darstellt und a 0, 1 oder 2 sein kann. X kann ein Halogenatom oder eine Alkoxy-, Aminoxy-, Phenoxy-, Thioalkoxy-, Acyloxy-, Säureamid-, Mercaptooder Ketoximatogruppe sein. Vorzugsweise handelt es sich um eine Alkoxygruppe mit 1 bis 5 Kohlenstoffatomen im Alkylrest. Eine besonders bevorzugte Silyl-Endgruppe ist die Dimethoxymethylsilylgruppe.

Das Molekulargewicht der Prepolymeren kann zwischen 500 und 20000, vorzugsweise zwischen 500 und 1 5000 liegen. Ganz besonders bevorzugt liegt das Molekulargewicht bei 3 000 bis 12 000. Besonders bevorzugte Prepolymere sind silylmodifizierte Polyether, welche durch Hydrosilylierung von Polyethern mit olefinisch ungesättigten Endgruppen erhalten werden können, vergl. die US-A-3 971 751. Geeignete silylmodifizierte Polyether entsprechen z.B. der Formel II

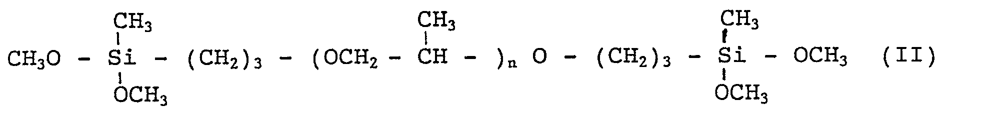

Zur Herstellung von feuchtigkeitshärtenden Form- und Dichtungsmassen werden den bekannten silylmodifizierten Polymeren metallorganische Zinnverbindungen als Katalysator zugesetzt, beispielsweise Zinn(II)octoat oder Dibutylzinnlaurat und Dibutylzinnmaleat (US-A-3 971 751). Die Anwendungseigenschaften der erfindungsgemäßen Massen werden jedoch auch durch die Auswahl der metallorganischen Zinnverbindung beeinflußt. Als besonders geeignete Katalysatoren haben sich das bei ca. 150°C erhaltene Reaktionsprodukt von Dibutylzinnoxid mit Dioctylphthalat und Dibutylzinnacetat erwiesen. Überraschenderweise sind ferner Dibutylzinndialkylate von C₃- bis C₆-Alkoholen, insbesondere Dibutylzinndibutylat besonders geeignet.

Ferner werden anorganische Füllstoffe wie Ruß, Calciumcarbonat, Titanoxid und dergleichen sowie Weichmacher, insbesondere Phthalsäureester wie Dioctylphthalat, Butylbenzylphthalat oder Phosphorsäureester wie Tricresylphosphat zugesetzt.

Als anorganische Füllstoffe finden erfindungsgemäß vorzugsweise hochdisperse Kieselsäuren, vor allem pyrogene Kieselsäuren oder Fällungskieselsäuren Verwendung, welche thixotropierend wirken und deren thixotropierende Eigenschaften in den erfindungsgemäßen Massen auch nach längerer Lagerung erhalten bleiben. Schließlich können die Massen übliche UV-Stabilisierungsmittel und Alterungsschutzmittel enthalten. Aminosilane wie z.B. γ-Glycidyloxypropyl- oder γ-Aminopropyl-trimethoxysilan dienen vor allem der Verbesserung der Haftung auf Glas, Metallen etc. Gleichzeitig fangen sie eventuelle Feuchtigkeit in den Füllstoffen ab, stellen dadurch eine gute Lagerstabilität sicher und wirken in gewissem Umfang als Co-Katalysator.

Außerdem können in der erfindungsgemäßen Form- und Dichtungsmasse die aus der DE-PS 38 16 808 bekannten Stabilisatoren (Isocyanat und/oder Carbonsäurechlorid) verwendet werden. In diesem Falle hat es sich bei der Herstellung der erfindungsgemäßen Masse als besonders günstig erwiesen, wenn die metallorganischen Zinnverbindungen mit dem Stabilisator gemeinsam nach dem Vermischen der übrigen Bestandteile der Masse zugefügt werden.

Alle oben erläuterten Bestandteile der erfindungsgemäßen Masse sind im Handel erhältlich, so daß eine detailliertere Beschreibung nicht erforderlich ist.

Mit dem erfindungsgemäßen Erreichen einer klebfreien Oberfläche bei vulkanisierten Form- und Dichtungsmassen auf Basis von SMP-Polymeren ist der Einsatz solcher Produkte für alle technischen Bereiche möglich geworden.

Zur näheren Erläuterung der Erfindung soll das nachfolgende Beispiel dienen, auf das die Erfindung jedoch nicht beschränkt ist.

### Beispiel

Es wurden die folgenden Dichtstoffe A bis E hergestellt, indem die nachfolgend genannten Komponenten in der angegebenen Reihenfolge in einem Rührkessel mittels eines Planetendissolvers unter Vakuum (Feuchtigkeitsausschluß) gemischt wurden:

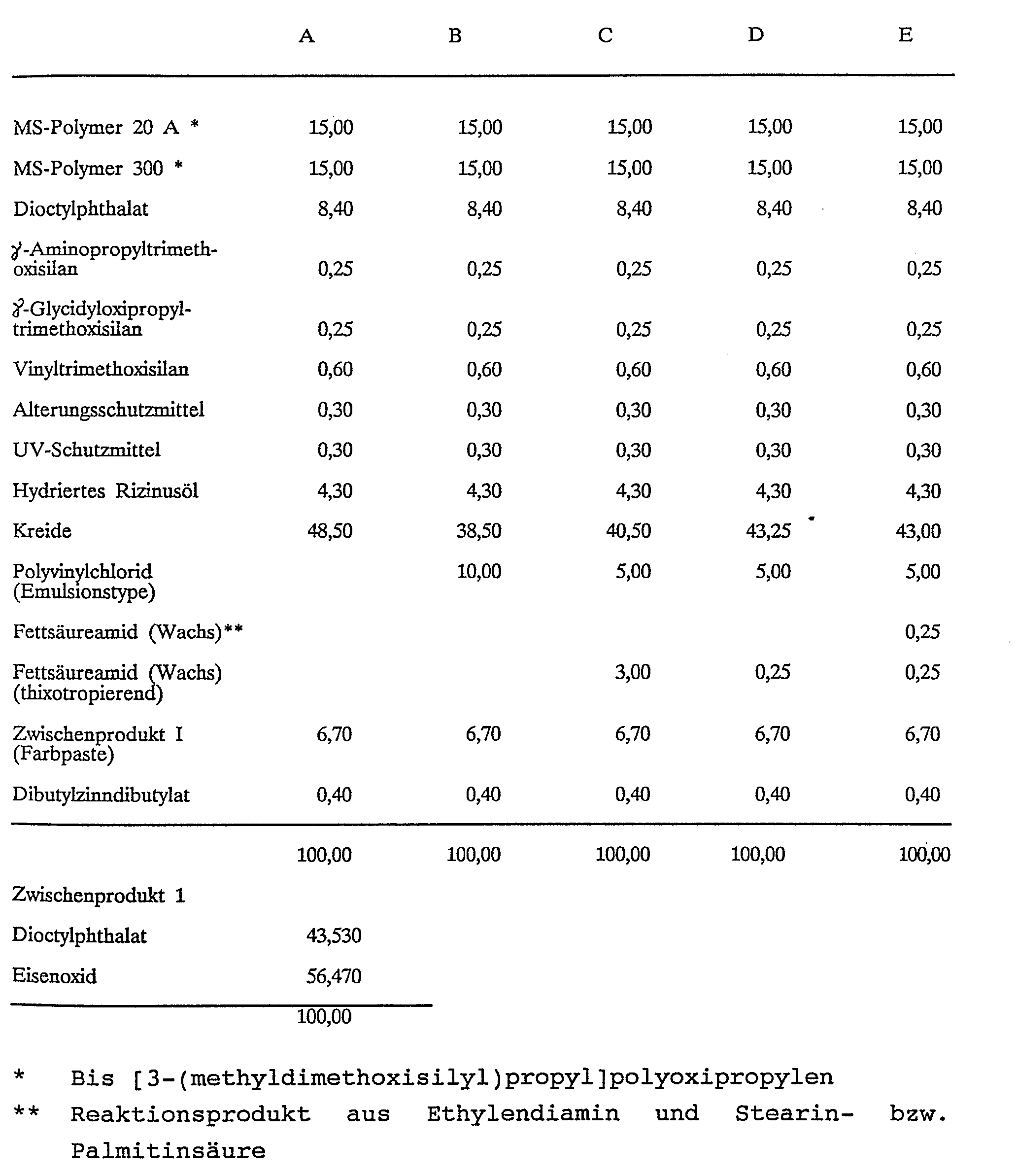

Anschließend wurden diese Dichtstoffe auf Glas- bzw. Polyethylenplatten und lackierten Hölzern aufgetragen, um die Haftung, Shore-A-Härte, Durchhärtungsgeschwindigkeit und Oberflächenklebrigkeit zu prüfen. Die Ergebnisse sind in der folgenden Tabelle zusammengefaßt:

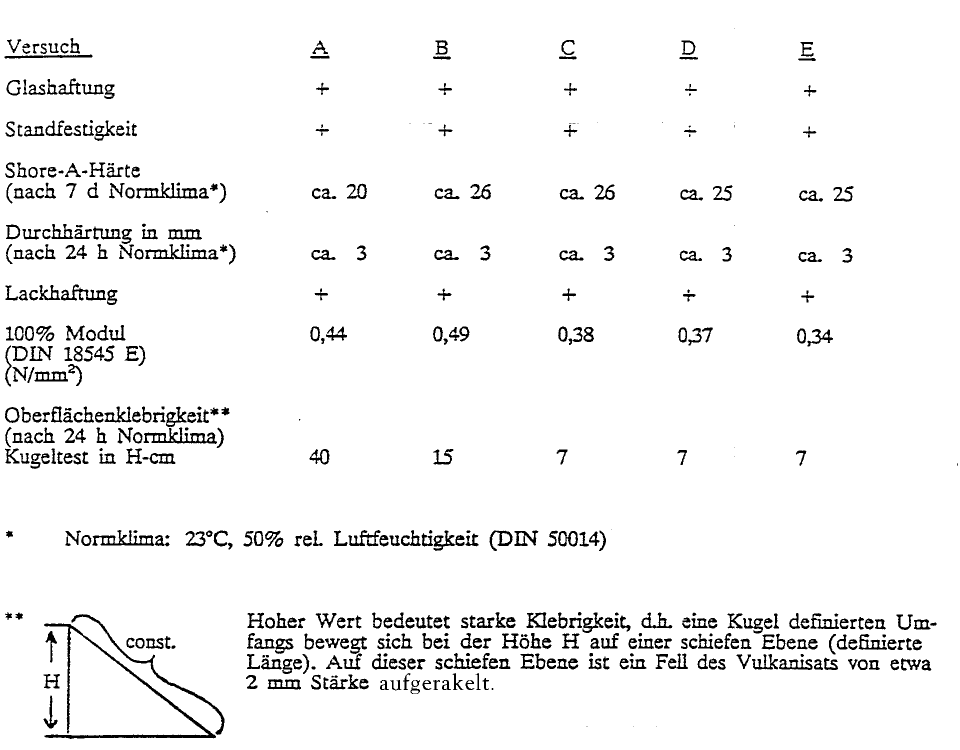

Die erhaltenen Ergebnisse zeigen, daß die Kombination PVC/Fettsäureamide (Wachs, thixotroper Typ) die größte Wirkung bezüglich der Verringerung der Oberflächenklebrigkeit ergibt. Aus wirtschaftlichen Gründen soll der Anteil an thixotropierend wirkendem Fettsäureamid so niedrig wie möglich gehalten werden. Die Untersuchungen zeigen ferner, daß die Erhöhung der Zugreißfestigkeit durch den Zusatz von PVC durch einen anderen Fettsäureamid (Wachs)-Typ (basierend auf dem Reaktionsprodukt von Ethylendiamin mit Stearin- und/oder Palmitinsäure) ausgeglichen werden kann.

## Patentansprüche

1. Ein-Komponenten-Form- und -Dichtungsmasse auf Basis von Prepolymeren, die Silyl-Endgruppen mit mindestens einem hydrolysierbaren Substituenten am Si-Atom enthalten, metallorganischen Zinnverbindungen als Katalysator sowie anorganischen Füllstoffen, **dadurch gekennzeichnet**, daß sie Polyvinylchlorid (PVC) und thixotropierend wirkendes Fettsäureamid enthält.

2. Masse nach Anspruch 1, **dadurch gekennzeichnet**, daß sie bis zu 10 Gew.% PVC enthält.

3. Masse nach Anspruch 2, **dadurch gekennzeichnet**, daß sie 1 bis 10 Gew.% und vorzugsweise 5 bis 10 Gew.% PVC enthält.

4. Masse nach einem der Ansprüche 1 bis 3, **dadurch gekennzeichnet,** daß sie bis zu 3 Gew.% thixotropierend wirkendes Fettsäureamid enthält.

5. Masse nach Anspruch 4, **dadurch gekennzeichnet**, daß sie 0,1 bis 0,5 Gew.% und vorzugsweise 0,2 bis 0,3 Gew.% thixotropierend wirkendes Fettsäureamid enthält.

6. Masse nach einem der Ansprüche 1 bis 5, **dadurch gekennzeichnet** , daß sie zusätzlich ein Fettsäureamid eines anderen Typs enthält, das auf dem Reaktionsprodukt von Ethylendiamin mit Stearin- und/oder Palmitinsäure basiert.

7. Masse nach Anspruch 6, **dadurch gekennzeichnet**, daß sie das Fettsäureamid eines anderen Typs in einer Menge von 0,05 bis 1 Gew.% und vorzugsweise 0,1 bis 0,3 Gew.% enthält.

8. Masse nach einem der Ansprüche 1 bis 7, **dadurch gekennzeichnet,** daß sie ein silylmodifiziertes Polyetherprepolymer enthält.

9. Masse nach einem der Ansprüche 1 bis 8, **dadurch gekennzeichnet** , daß das Polyvinylchlorid (PVC) durch Emulsionspolymerisation hergestellt worden ist.

## Claims

1. One-component moulding and sealing compound based on prepolymers which contain terminal silyl groups with at least one hydrolyzable substituent on the Si-atom, organo-metallic tin compounds as catalyst as well as inorganic fillers, **characterized in that** it contains polyvinyl chloride (PVC) and fatty acid amide having thixotropic effect.

2. Compound according to claim 1, **characterized in that** it contains up to 10% by weight of PVC.

3. Compound according to claim 2, **characterized in that** it contains 1 to 10% by weight and preferably 5 to 10% by weight of PVC.

4. Compound according to one of claims 1 to 3, **characterized in** **that** it contains 3% by weight of fatty acid amide having thixotropic effect.

5. Compound according to claim 4, **characterized in that** it contains 0.1 to 0.5% by weight and preferably 0.2 to 0.3% by weight of fatty acid amide having thixotropic effect.

6. Compound according to one of claims 1 to 5, **characterized in** **that** it contains in addition a fatty acid amide of another type which is based on the reaction product of ethylene diamine with stearic and/or palmitic acid.

7. Compound according to claim 6, **characterized in that** it contains a fatty acid amide of another type in an amount of 0.05 to 1% by weight and preferably 0.1 to 0.3% by weight.

8. Compound according to one of claims 1 to 7, **characterized in** **that** it contains a silyl-modified polyether prepolymer.

9. Compound according to one of claims 1 to 8, **characterized in that** the polyvinyl chloride (PVC) has been produced by emulsion polymerisation.

## Revendications

1. Pâte de moulage et d'étanchéité à un composant, à base de prépolymères contenant des groupes terminaux silyle avec au moins un substituant hydrolysable sur un atome de silicium, des composés organométalliques d'étain intervenant comme catalyseurs, ainsi que des charges non organiques, caractérisée en ce qu'elle contient du chlorure de polyvinyle (PVC) et une amide d'acide gras à caractère thixotrope.

2. Pâte selon la revendication 1, caractérisée en ce qu'elle contient jusqu'à 10 % en poids de PVC.

3. Pâte selon la revendication 2, caractérisée en ce qu'elle contient de 1 à 10 % en poids de PVC, de préférence de 5 à 10 %.

4. Pâte selon l'une des revendications 1 à 3, caractérisée en ce qu'elle contient jusqu'à 3 % en poids d'amide d'acide gras à caractère thixotrope.

5. Pâte selon la revendication 4, caractérisée en ce qu'elle contient de 0,1 à 0,5 % en poids de préférence de 0,2 à 0,3 % d'amide d'acide gras à caractère thixotrope.

6. Pâte selon l'une des revendications 1 à 5, caractérisée en ce qu'elle contient, en plus, une amide d'acide gras d'un autre type basée sur le produit de la réaction d'éthylènediamine avec de l'acide stéarique et/ou palmitique.

7. Pâte selon la revendication 6, caractérisée en ce que l'amide d'acide gras d'un autre type qu'elle contient, l'est dans une proportion de 0,05 à 1 % en poids, de préférence 0,1 à 0,3 %/

8. Pâte selon l'une des revendications 1 à 7, caractérisée en ce qu'elle contient un polyétherprépolymère de silyle modifié.

9. Pâte selon l'une des revendications 1 à 2, caractérisée en ce qu'on doit produire du chlorure de polyvinyle (PVC) par polymérisation d'émulsion.
